# EUROPÄISCHE PATENTSCHRIFT

(11) **EP 0 513 716 B1**
(45) Veröffentlichungstag und Bekanntmachung des Hinweises auf die Patenterteilung: **25.01.1995**
(21) Anmeldenummer: 92107911.7
(22) Anmeldetag: 11.05.1992
(51) Int. Cl.: B23Q 1/25

(54) **Numerisch gesteuerte Werkzeugmaschine mit Horizontal-Vertikal-Kopf**
Numerically controlled machine tool with horizontal-vertical spindle nose
Machine-outil à commande numérique avec nez de broche horizontal-vertical

(30) Priorität: 13.05.1991 DE 4115582
(43) Veröffentlichungstag der Anmeldung: 19.11.1992
(73) Patentinhaber: DÖRRIES SCHARMANN GmbH, D-41236 Mönchengladbach (DE)
(72) Erfinder: Kessler, Kurt, W-8000 München 80 (DE)
(74) Vertreter: Finsterwald, Manfred, Dipl.-Ing., Dipl.-Wirtsch.-Ing.

(56) Entgegenhaltungen:
- EP-A- 0 252 291
- CH-A- 270 095
- DD-A- 242 997
- DE-A- 1 625 888
- FR-A- 1 447 322
- FR-A- 2 469 239
- FR-A- 2 635 037

## Beschreibung

Die Erfindung betrifft eine numerisch gesteuerte Werkzeugmaschine nach dem Oberbegriff des Anspruchs 1.

Aus der FR-A-2 635 037 ist eine Werkzeugmaschine dieser Art bekannt, bei der ein Werkzeugkopf bezüglich eines Trägers um eine Drehachse drehbar ist und in seiner horizontalen und seiner vertikalen Arbeitsstellung verriegelbar ist.

Ferner ist aus der DD-242 997 A1 eine Werkzeugmaschine bekannt, bei der ebenfalls der Spindelkopf in mehreren Arbeitsstellungen betrieben werden kann. Diese Werkzeugmaschine weist außerdem einen geschlossenen Schmierölkreislauf mit ortsveränderlichen Ölsammelräumen auf, die durch einen die Spindelkopfbaueinheiten durchkreuzenden Öldurchlaß miteinander verbunden sind. Im Bereich der Ölsammelräume sind Kolbenpumpen vorgesehen, die saugseitig jeweils mit einem Ölsammelraum und druckseitig mit einer Rücklaufleitung in Verbindung stehen.

Nachteilig bei diesem Schmierölkreislauf ist, daß er aus einer Vielzahl von Kolbenpumpen, Zumeßventilen und Ölleitungen besteht und daher relativ kompliziert und aufwendig aufgebaut ist.

Es ist die Aufgabe der Erfindung, einen geschlossenen Schmierölkreislauf für eine Arbeitsspindel zu schaffen, der in jeder Arbeitsstellung der Arbeitsspindel deren ausreichende Ölschmierung gewährleistet und gleichzeitig einfach und damit kostengünstig und störunanfällig aufgebaut ist.

Diese Aufgabe wird erfindungsgemäß durch die Merkmale des Anspruchs 1 gelöst.

Durch die Absaugung des Schmieröls über das in der Schwenkachse des HV-Kopfes verlaufende Ölabsaugrohr ist es möglich, mit einem geschlossenen Schmierölkreislauf zu arbeiten und das öl jeweils wieder in einen größeren Behälter zurückzuführen. Dadurch wird zum einen ein erwünschter Kühleffekt erzielt, der es in Verbindung mit der kontinuierlichen Öldurchströmung ermöglicht, die Maschine auch stets mit maximaler Drehzahl laufen zu lassen, und zum anderen wird eine ausgesprochen umweltfreundliche Anordnung erhalten, bei der kein unerwünschter bzw. unkontrollierter Ölaustritt erfolgt.

Das Ölabsaugrohr ist als feststehendes Rohr ausgebildet und an seinem saug- bzw. arbeitsspindelseitigen Ende verschlossen.

Dieses Ende ist von einer mit dem schwenkbaren Kopf verbundenen, bezüglich des Ölabsaugrohrs beidendig abgedichteten Hülse umgeben, die in ihrer Wandung zwei einander diametral gegenüberliegende Öffnungen aufweist, welche wechselweise mit einer korrespondierenden Öffnung in der Wandung des feststehenden Absaugrohres ausgerichtet sind. Die Öffnungen in der Hülse stehen mit im Kopf ausgebildeten Bohrungen in Verbindung, die zum Horizontalsumpf bzw. Vertikalsumpf im Kopf führen, so daß auf diese Weise eine einfache und funktionssichere Ventilanordnung erhalten wird, welche in Abhängigkeit von der jeweiligen Betriebssituation ein Absaugen des Öls aus dem jeweils tiefstliegenden Bereich ermöglicht.

Der Schwenkkopf wird in bekannter- Weise positionsgenau mittels stirnverzahnter Ringe gehalten, wobei die zum Zwecke des Verschwenkens des Schwenkkopfes erforderliche Anhebebewegung und die anschließende Verriegelungsbewegung mittels einer Hub- und Spannkolbenanordnung realisiert ist. Diese Hub- und Spannkolbenanordnung ist sehr raumsparend ausgebildet und ermöglicht es daher, angrenzend an diese Hub- und Spannvorrichtung im Bereich der Schwenkachse einen Drehverteiler zur Zuführung von Schmieröl, Luft, Sperröl und dergleichen unterzubringen.

Eine weitere vorteilhafte Besonderheit der Werkzeugmaschine nach der Erfindung besteht darin, daß der Kopf zusammen mit der mit ihm verriegelbaren Trägereinheit um eine vertikale, als NC-Achse ausgebildete Achse verschwenkbar ist und daß zur Erfassung der jeweiligen Drehwinkellage ein stationärer Drehgeber vorgesehen ist, der über eine starre mechanische Verbindung mit der dem Kopf zugeordneten Trägereinheit gekuppelt ist.

Auf diese Weise wird eine völlig exakte Bestimmung der jeweiligen Position gewährleistet, da durch den Direktantrieb des Drehgebers jegliches Spiel ausgeschaltet und auch störende Schleifringübertragungen vermieden werden.

Die starre Verbindung wird vorzugsweise über ein Rohr vorgenommen, das gleichzeitig zur Aufnahme und Führung elektrischer Leitungen genutzt werden kann, die die Signale von dem Kopf zugeordneten Sensororganen nach außen übertragen, und zwar wiederum ohne Zwischenschaltung von störungsanfälligen Schleifringeinheiten.

Ein Ausführungsbeispiel der Erfindung wird anhand der Zeichnung erläutert; in der Zeichnung zeigt:
- Figur 1: eine zum Teil schematisch dargestellte Schnittansicht eines HV-Spindelkopfes für eine numerisch gesteuerte Werkzeugmaschine, und
- Figur 2: eine Detaildarstellung des bei der Vorrichtung nach Figur 1 verwendeten Ventils zur Verbindung des Absaugrohrs mit dem Horizontal- oder Vertikalsumpf.

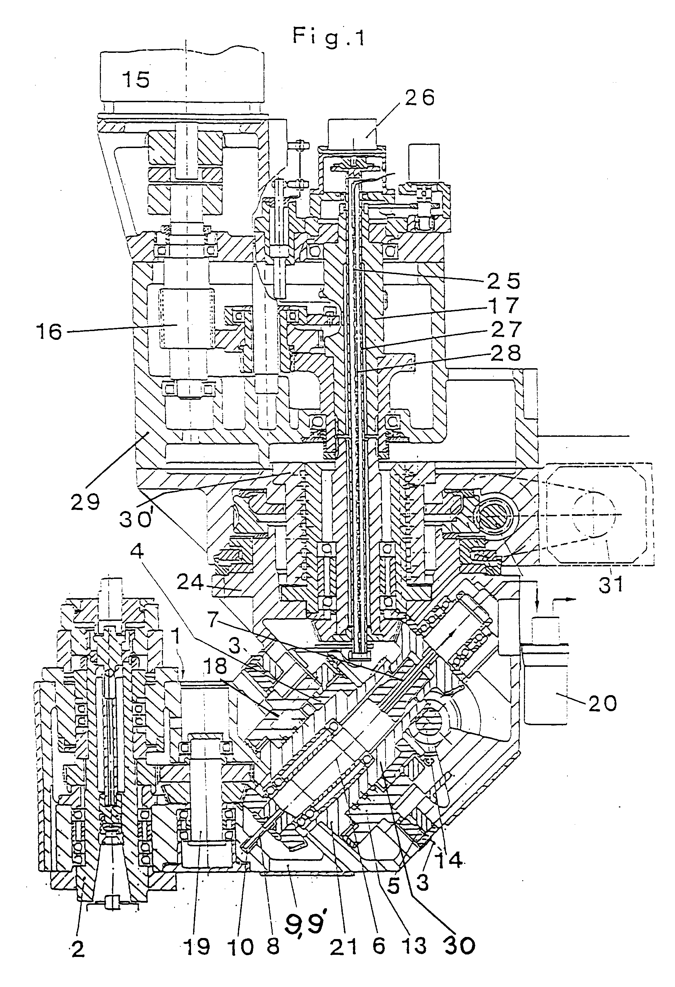

Der in Figur 1 gezeigte Horizontal-Vertikal-Spindelkopf umfaßt einen Schwenkkopf 1, der in einer unter 45° zur Horizontalen verlaufenden Ebene 3-3 um eine Schwenkachse 6 verschwenkbar und in der gezeigten Vertikalposition sowie in einer um 180° geschwenkten Horizontalposition für die Arbeitsspindel 2 positionsgenau verriegelbar ist.

Das Verschwenken des Schwenkkopfes 1 erfolgt über einen Schwenkantrieb 14, der direkt mit einem die Schwenkachse 6 umgebenden Hülsenteil 21 verbunden ist. Die Hub- und Verriegelungsbewegung des Schwenkkopfes 1 wird mittels eines Hubund Spannkolbens 4 ausgeführt, der sehr kompakt ausgebildet ist und während des Arbeitsbetriebs gewährleistet, daß die Stirnverzahnungen 5 mit definierter Kraft gegeneinander gepreßt werden und damit eine einwandfreie, positionsgenaue Verriegelung gewährleistet ist.

Der Antrieb der Schwenkachse 6 erfolgt ausgehend von einem Hauptantrieb 15 über eine Hauptantriebswelle 16 sowie eine Zwischenwelle 17, die mit der Schwenkachse 6 über entsprechende Kegelräder kämmt.

Über ein weiteres, abtriebsseitig angeordnetes Kegelradpaar und eine Zwischenwelle 19 wird die Arbeitsspindel 2 angetrieben.

Wesentlich für die Erfindung ist die Ausbildung eines geschlossenen Schmierölkreislaufes, der sicherstellt, daß der Schwenkkopf 1 stets in Öl läuft und dieses Öl nicht austreten kann, sondern in einem geschlossenen Kreislauf geführt wird.

Zur Realisierung dieses geschlossenen Kreislaufes ist die Schwenkachse 6 mit einer durchgehenden Axialbohrung 7 versehen, durch die sich ein Ölabsaugrohr 8 erstreckt. Dieses Ölabsaugrohr 8 ist drehfest angebracht und steht arbeitsspindelseitig über die Schwenkachse 6 vor. Dieses vorstehende freie Ende des Ölabsaugrohrs 8 ist mit einer noch zu erläuternden Ventilanordnung versehen.

Das dieser Ventilanordnung gegenüberliegende Ende des Ölabsaugrohrs 8 ist mit einer Pumpe 20 verbunden, die in den Schmierölkreislauf geschaltet ist und das abgesaugte Schmieröl in einen Sammelbehälter zurückleitet. Dabei findet auch eine erwünschte Abkühlung des Schmieröls statt.

Eine Zuführung 18 leitet das Schmieröl zu einem Drehverteiler 30, der im Bereich des Hub- und Spannkolbens 4 angeordnet ist und mit dem zur Ausführung der Schwenkbewegungen betätigbaren Hülsenteil 21 zusammenwirkt.

Das Schmieröl sammelt sich jeweils in einem Vertikalsumpf 9 bzw. Horizontalsumpf 9', und aus dem jeweiligen Sumpf wird das öl über entsprechend vorgesehene Verbindungsbohrungen 22 und das Ölabsaugrohr 8 abgezogen.

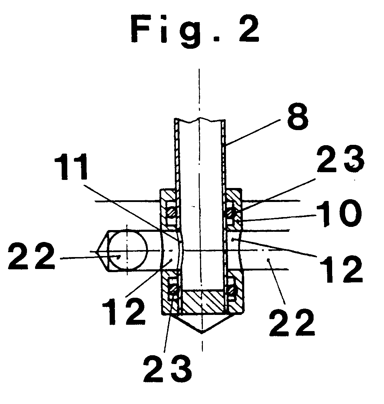

Figur 2 zeigt das arbeitsspindelseitige Ende des Ölabsaugrohrs 8, das am Ende verschlossen ist und in der Wandung eine Öffnung 11 aufweist. Dieses Ende des feststehenden Ölabsaugrohrs 8 ist von einer mit dem Schwenkkopf 1 verschwenkbaren Hülse 10 umgeben, die über beidendig vorgesehene Dichtungen 23 bezüglich des Ölabsaugrohrs 8 abgedichtet ist und zwei einander diametral gegenüberliegende Öffnungen 12 aufweist, die wechselweise und in Abhängigkeit von der Verschwenkung des Schwenkkopfes 1 mit der Öffnung 11 im Ölabsaugrohr 8 ausgerichtet sind. Ölabsaugrohr 8 und Hülse 10 bilden somit ein Ventil, das über entsprechende, im Kopf 1 ausgebildete Bohrungen 22 mit dem Horizontal- bzw. Vertikal-Sumpfraum 9, 9' verbindbar ist. Damit wird zwangsläufig sichergestellt, daß in der jeweiligen Arbeitsposition des Schwenkkopfes ohne zusätzlich erforderliche Umschalt- oder Ventilbetätigungsvorgänge ein Absaugen des Öls aus dem jeweils tiefsten Bereich der Anordnung erfolgen kann.

Nach einer weiteren Besonderheit der Erfindung kann der gesamte Spindelkopf mit einer zweiten, als vertikale NC-Achse ausgebildeten Drehmöglichkeit versehen werden. Auf diese Weise kann bei der Horizontalbearbeitung der Arbeitsbereich vergrößert werden, und bei der Vertikalbearbeitung ergeben sich zusätzliche Bearbeitungsflächen.

Dazu ist der Kopf 1 zusammen mit der mit ihm verriegelbaren Trägereinheit 24 um eine vertikale Achse, die praktisch von der Zwischenwelle 17 gebildet wird, verschwenkbar ausgeführt. Da die jeweilige Verschwenkung exakt ermittelt werden muß, ist gemäß einer weiteren Besonderheit der Erfindung die Zwischenwelle 17 als Hohlwelle ausgebildet, und in dieser Hohlwelle ist ein mit der Trägereinheit 24 fest verbundenes Rohr 27 angeordnet, das drehfest mit einem gehäusefesten Drehgeber 26 verbunden ist. Auf diese Weise wird eine spielfreie, keinerlei Schleifringe und dergleichen erfordernde Erfassung der Verschwenkung des Kopfes 1 um die Vertikalachse 25 erreicht. Der Antrieb 31 für das Verschwenken um die vertikale Achse ist im Übergangsbereich zwischen dem feststehenden Gehäuse 29 und der Trägereinheit 24 angebracht, und in diesem Übergangsbereich ist auch ein Drehverteiler 30' vorgesehen, der zwischen einem hülsenförmigen Ansatz der Trägereinheit 24 und einem diesen koaxial übergreifenden Teil des feststehenden Gehäuses 29 ausgebildet ist.

Das mit dem Drehgeber 26 verbundene Rohr 27 dient gleichzeitig zur Aufnahme elektrischer Verbindungleitungen 28, die zu entsprechenden Sensoren in der Trägereinheit 24 führen und es gestatten, die Horizontal- oder Vertikalstellung, die Schwenk- oder Verriegelungsposition und dergleichen kennzeichnenden Signale schleifringfrei nach außen zu übertragen.

Durch die Erfindung wird somit ein Arbeitskopf für eine Werkzeugmaschine von äußerst kompaktem, betriebssicherem Aufbau geschaffen, der sich durch universelle Einsetzbarkeit auszeichnet.

### Bezugszeichenliste

- 1: Schwenkkopf
- 2: Arbeitsspindel
- 3: Schwenkebene
- 4: Hub- und Spannkolben
- 5: Stirnverzahnung
- 6: Schwenkachse
- 7: Axialbohrung
- 8: Ölabsaugrohr
- 9, 9': Sumpfraum
- 10: Hülse
- 11: Saugrohr-Öffnung
- 12: Hülsenöffnungen
- 13: Drehverteiler
- 14: Schwenkantrieb
- 15: Hauptantrieb
- 16: Hauptantriebswelle
- 17: Zwischenwelle
- 18: Schmierölzuführung
- 19: Zwischenwelle
- 20: Pumpe
- 21: Hülsenteil
- 22: Bohrungen
- 23: Dichtung
- 24: Trägereinheit
- 25: Vertikalachse
- 26: Drehgeber
- 27: Rohr
- 28: Elektrische Verbindungen
- 29: Feststehendes Gehäuse
- 30: Drehverteiler
- 31: Antrieb

## Patentansprüche

1. Numerisch gesteuerte Werkzeugmaschine, bei der die Arbeitsspindel (2) in einem um 180° um eine unter 45° zur Horizontalen geneigte antreibbare Schwenkachse (6) verschwenkbaren Kopf (1) gelagert ist, der in der horizontalen und in der vertikalen Stellung der Arbeitsspindel (2) mittels einer beidseitig beaufschlagbaren Hub- und Spannkolbenanordnung (4) sowie positionsgenau ineinandergreifender verzahnter Elemente (5) verriegelbar ist, und bei der in jeder Arbeitsstellung der Arbeitsspindel (2) ein geschlossener Schmierölkreislauf zwischen einem im Bereich der Arbeitsspindel (2) und mit dieser bewegbar angeordneten, eine Ölsammelstelle bildenden Sumpfraum (9, 9') und einer nicht zusammen mit der Arbeitsspindel (2) bewegbaren Pumpe (20) besteht,
dadurch **gekennzeichnet,**
daß die in dem geschlossenen Schmierölkreislauf vorhandene Verbindung zwischen dem Sumpfraum (9, 9') und der Pumpe (20) durch ein Ölabsaugrohr (8) gebildet wird, welches sich durch eine Axialbohrung (7) erstreckt, die durch die Schwenkachse (6) verläuft,
daß das Ölabsaugrohr (8) als feststehendes Rohr ausgebildet, an seinem saug- bzw. arbeitsspindelseitigen Ende verschlossen und von einer zusammen mit dem Kopf (1) verschwenkbaren, bezüglich des Ölabsaugrohres (8) an ihren beiden Enden abgedichteten Hülse (10) umgeben ist, und
daß das Ölabsaugrohr (8) in dem zwischen den beiden Dichtungen (23) gelegenen Bereich der Hülse (10) in seiner Wandung eine Öffnung (11) aufweist, welche wechselweise mit einander diametral gegenüberliegenden, korrespondierenden Öffnungen (12) in der Wandung der Hülse (10) ausgerichtet ist und das Absaugrohr (8) über im Kopf (1) vorgesehene Bohrungen (22) mit dem Sumpfraum (9, 9') verbinden.

2. Werkzeugmaschine nach Anspruch 1,
dadurch **gekennzeichnet,**
daß zur Schmierölzuführung ein Drehverteiler (13) vorgesehen ist, der im Bereich zwischen der Hub- und Spannkolbenanordnung (4) und dem abtriebsseitigen Ende der Schwenkachse (6) angeordnet ist.

3. Werkzeugmaschine nach einem der vorhergehenden Ansprüche,
dadurch **gekennzeichnet,**
daß der Kopf (1) zusammen mit der mit ihm verriegelbaren Trägereinheit (24) um eine vertikale, als NC-Achse ausgebildete Achse (25) verschwenkbar ist und daß zur Erfassung der jeweiligen Drehwinkellage ein stationärer Drehgeber (26) vorgesehen ist, der über eine starre mechanische Verbindung (27) mit der dem Kopf (1) zugeordneten Trägereinheit (24) gekuppelt ist.

4. Werkzeugmaschine nach Anspruch 3,
dadurch **gekennzeichnet,**
daß die starre mechanische Verbindung aus einem Rohr (27) besteht, das sich durch die den Hauptantrieb (15) mit dem Kopf (1) verbindende vertikale Zwischenwelle (17) erstreckt.

5. Werkzeugmaschine nach Anspruch 4,
dadurch **gekennzeichnet,**
daß durch das Rohr (27) elektrische Leitungen (28) geführt sind, die mit Positionsabfrageorganen in der Trägereinheit (24) verbunden sind.

6. Werkzeugmaschine nach einem der vorhergehenden Ansprüche,
dadurch **gekennzeichnet,**
daß zwischen der Trägereinheit (24) und dem dem Hauptantrieb zugeordneten feststehenden Gehäuse (29) koaxial zur hohl ausgebildeten Zwischenwelle (17) ein Drehverteiler (30') angeordnet ist.

## Claims

1. Numerically controlled machine tool, wherein the working spindle (2) is journalled in a head (1) which is pivotable through 180° about a driveable pivot axle (6) inclined at 45° to the horizontal line and is latchable in the horizontal and in the vertical position of the working spindle (2) by a lifting and clamping piston arrangement which can be energised from both sides, as well as by accurately position interlocking toothed elements (5), and wherein there is a closed lubrication oil circuit in every working position of the working spindle (2) between a sump space (9, 9') which forms an oil collection point and which is arranged in the region of the working spindle (2) and is arranged to move with the latter, and a movable pump (20) which is not movable with the working spindle (2),
characterised in that
the connection which is present in the closed lubrication oil circuit between the sump space (9, 9') and the pump (20) is formed by an oil suction pipe (8) extending through an axial bore (7) which extends through the pivot axle (6),
in that
the oil suction pipe (8) is formed as a rigid pipe, is closed at its suction side end as well as at its working spindle side end and is surrounded by a sleeve (10) which is sealed at both ends relative to the oil suction pipe (8) and which can be pivoted together with the head (1),
and in that
the oil suction pipe (8) has an aperture (11) in its wall in the region of the sleeve (10) which lies between the two seals (23), with the aperture being alternatingly aligned with corresponding apertures (12) in the wall of the sleeve (10) which are diametrically opposite to one another and which connect the suction pipe (8) to the sump space (9, 9') through bores (22) provided in the head (1).

2. Machine tool in accordance with claim 1,
characterised in that
a rotary distributer (13) is provided for the supply of lubrication oil and is arranged in the region between the lifting piston and clamping piston arrangement (4) and the output drive end of the pivot axle (6).

3. Machine tool in accordance with one of the preceding claims,
characterised in that
the head (1) is pivotable together with the carrier unit (24) which can be latched to the head (1) about a vertical axis (25) formed as a NC-axis,
and in that
in order to detect the respective position of the angle of rotation, a stationary rotary encoder (26) is provided which is coupled through a rigid mechanical connection (27) with the carrier unit (24) associated with the head (1).

4. Machine tool in accordance with claim 3,
characterised in that
the rigid mechanical connection comprises a tube (27) extending through the vertical intermediate shaft (17) which connects the main drive (15) to the head (1).

5. Machine tool in accordance with claim 4,
characterised in that
electrical leads (28) connected to position interrogation members in the carrier unit (24) are channelled through the tube (27).

6. Machine tool in accordance with one of the preceding claims,
characterised in that
a rotary distributor (30') is arranged coaxially to the hollow intermediate shaft (17) between the carrier unit (24) and the stationary housing (29) associated with the main drive.

## Revendications

1. Machine-outil à commande numérique, dans laquelle l'arbre moteur (2) est logée dans une tête (1) pouvant pivoter sur 180° autour d'un axe (6) de pivotement pouvant être entraîné en 45° par rapport à l'horizontale, la tête pouvant être verrouillée dans les positions horizontale et verticale de l'arbre moteur (2) au moyen d'un dispositif (4) à piston de levage et de serrage, et au moyen d'éléments dentés (5) s'engrenant les uns dans les autres de manière à définir des positions précises, et dans laquelle un circuit de graissage fermé existe entre une chambre réservoir (9, 9') disposée au niveau de l'abre moteur (2) et mobile avec celle-ci, formant un collecteur d'huile, et une pompe (20) non mobile avec l'arbre moteur (2),
caractérisée en ce que la communication existant dans le circuit de graissage fermé, entre la chambre réservoir (9, 9') et la pompe (20), est formée par un tube (8) d'aspiration d'huile qui s'étend à travers un alésage axial (7) traversant l'axe (6) de pivotement,
en ce que le tube (8) d'aspiration d'huile est réalisé sous forme d'un tube stationnaire dont l'extrémité située du côté aspiration ou du côté arbre moteur est fermée et est entourée par une douille (10) pouvant pivoter de façon concomitante avec la tête (1), dont les deux extrémités rejoignent de façon étanche le tube (8) d'aspiration d'huile, et
en ce que le tube (8) d'aspiration d'huile comporte une ouverture (11) ménagée dans la paroi de celui-ci, dans une zone située entre les deux joints d'étanchéité (23) de la douille (10), cette ouverture pouvant être alignée en alternance sur des ouvertures (12) diamétralement opposées, communiquant l'une avec l'autre, ménagées dans la paroi de la douille (10), et reliant le tube (8) d'aspiration d'huile à la chambre réservoir (9, 9') via des alésages (22) prévus dans la tête (1).

2. Machine-outil selon la revendication 1, caractérisée en ce qu'un distributeur rotatif (13) est prévu pour l'alimentation en huile de graissage, lequel distributeur est disposé dans la zone située entre le dispositif (4) à piston de levage et de serrage et l'extrémité côté sortie de l'axe (6) de pivotement.

3. Machine-outil selon l'une des revendications précédentes, caractérisée en ce que la tête (1) est montée pivotante simultanément avec l'ensemble de support (24), pouvant être verrouillé avec celle-ci, autour d'un axe vertical (25) constituant un axe CN, et en ce qu'un indicateur stationnaire (26) de rotation est prévu pour relever la position angulaire respective de rotation, cet indicateur étant couplé, par l'intermédiaire d'une liaison mécanique rigide (27), à l'ensemble de support (24) associé à la tête (1).

4. Machine-outil selon la revendication 3, caractérisée en ce que la liaison mécanique rigide est constituée par un tube (27) s'étendant à travers l'arbre intermédiaire (17) reliant l'entraînement principal (15) à la tête (1).

5. Machine-outil selon la revendication 4, caractérisée en ce que des conducteurs électriques (28) reliés à des organes d'interrogation de la position agencés dans l'ensemble de support (24) passent à travers le tube (27).

6. Machine-outil selon l'une des revendications précédentes, caractérisée en ce qu'un distributeur rotatif (30) est disposé entre l'ensemble de support (24) et le carter fixe (29) associé à l'entraînement principal, et coaxialement à l'arbre intermédiaire (17) réalisé sous forme d'un arbre creux.
